# EUROPEAN PATENT APPLICATION

(11) **EP 4 521 181 A1**
(43) Date of publication of application: **12.03.2025**
(21) Application number: 23196601.1
(22) Date of filing: 11.09.2023
(51) Int. Cl.: G05B 23/02

(54) **METHOD FOR DETERMINING ROOT CAUSES OF EVENTS OF A SEMICONDUCTOR MANUFACTURING PROCESS AND FOR MONITORING A SEMICONDUCTOR MANUFACTURING PROCESS**

(71) Applicant: ASML Netherlands B.V., 5500 AH Veldhoven (NL)
(72) Inventor: LANCIA, Carlo, 5500 AH Veldhoven (NL); GKOROU, Dimitra, 5500 AH Veldhoven (NL); VAN HERTUM, Pieter, 5500 AH Veldhoven (NL)
(74) Representative: ASML Netherlands B.V.

(57) **Abstract**

Described is a method for assessing a plurality of candidate actions for obtaining evidence data and relating to an assessment action of at least one manufacturing apparatus or system, the method comprising: obtaining at least one probabilistic model which relates said evidence data to an estimated probability of one or more assessment states of the manufacturing apparatus; determining, using the at least one probabilistic model, an estimated probability of one or more assessment states based on evidence data comprising additional evidence from one or more candidate actions which have not been performed; determining a reward based on the respective estimated probability of the one or more assessment states and an associated respective cost of said one or more candidate actions; and deciding on whether to perform any of said one or more candidate actions based on said reward.

## Description

### FIELD

The present invention relates to semiconductor manufacturing processes, in particular methods to determine root causes which affect yield on substrates subject to the process.

### BACKGROUND

A lithographic apparatus is a machine constructed to apply a desired pattern onto a substrate. A lithographic apparatus can be used, for example, in the manufacture of integrated circuits (ICs). A lithographic apparatus may, for example, project a pattern (also often referred to as "design layout" or "design") at a patterning device (e.g., a mask) onto a layer of radiation-sensitive material (resist) provided on a substrate (e.g., a wafer).

To project a pattern on a substrate a lithographic apparatus may use electromagnetic radiation. The wavelength of this radiation determines the minimum size of features which can be formed on the substrate. Typical wavelengths currently in use are 365 nm (i-line), 248 nm, 193 nm and 13.5 nm. A lithographic apparatus, which uses extreme ultraviolet (EUV) radiation, having a wavelength within the range 4-20 nm, for example 6.7 nm or 13.5 nm, may be used to form smaller features on a substrate than a lithographic apparatus which uses, for example, radiation with a wavelength of 193 nm.

Low-k1 lithography may be used to process features with dimensions smaller than the classical resolution limit of a lithographic apparatus. In such process, the resolution formula may be expressed as CD = k1×λ/NA, where λ is the wavelength of radiation employed, NA is the numerical aperture of the projection optics in the lithographic apparatus, CD is the "critical dimension" (generally the smallest feature size printed, but in this case half-pitch) and k1 is an empirical resolution factor. In general, the smaller k1 the more difficult it becomes to reproduce the pattern on the substrate that resembles the shape and dimensions planned by a circuit designer in order to achieve particular electrical functionality and performance. To overcome these difficulties, sophisticated fine-tuning steps may be applied to the lithographic projection apparatus and/or design layout. These include, for example, but not limited to, optimization of NA, customized illumination schemes, use of phase shifting patterning devices, various optimization of the design layout such as optical proximity correction (OPC, sometimes also referred to as "optical and process correction") in the design layout, or other methods generally defined as "resolution enhancement techniques" (RET). Alternatively, tight control loops for controlling a stability of the lithographic apparatus may be used to improve reproduction of the pattern at low k1.

These tight control loops are generally based on metrology data obtained using a metrology tool measuring characteristics of the applied pattern or of metrology targets representing the applied pattern. In general the metrology tool is based on optical measurement of the position and/or dimensions of the pattern and/or targets. It is intrinsically assumed that these optical measurements are representative for a quality of the process of manufacturing of the integrated circuits.

Lithographic tools and/or associated tools (deposition tools, exposure tools, metrology tools), herein collectively referred to as integrated circuit (IC) manufacturing tools (e.g., any tools used in an IC manufacturing process), or manufacturing tools more generally, may be very complex. As such, any performance which is non-ideal, herein referred to as divergent behavior, may result from a number of different possible root causes, with the actual responsible root cause(s) difficult to identify.

It would be desirable to improve methods for identifying one or more root causes of divergent behavior in a manufacturing process such as an IC manufacturing process.

### SUMMARY

It is an object of the inventors to address the mentioned disadvantages of the state of the art.

In a first aspect of the invention the is provided a method for assessing a plurality of candidate actions for obtaining evidence data and relating to an assessment action of at least one manufacturing apparatus or system, the method comprising: obtaining at least one probabilistic model which relates said evidence data to an estimated probability of one or more assessment states of the manufacturing apparatus; determining, using the at least one probabilistic model, an estimated probability of one or more assessment states based on evidence data comprising additional evidence from one or more candidate actions which have not been performed; determining a reward based on the respective estimated probability of the one or more assessment states and an associated respective cost of said one or more candidate actions; and deciding on whether to perform any of said one or more candidate actions based on said reward.

### BRIEF DESCRIPTION OF THE DRAWINGS

Embodiments of the invention will now be described, by way of example only, with reference to the accompanying schematic drawings, in which:
Figure 1 depicts a schematic overview of a lithographic apparatus;
Figure 2 depicts a schematic overview of a lithographic cell;
Figure 3 depicts a schematic representation of holistic lithography, representing cooperation between three key technologies to optimize semiconductor manufacturing;
Figure 4 is a high-level flow diagram illustrating a root cause estimation method according to an embodiment;
Figure 5 is a specific example of a probabilistic graphical model which may be used in embodiments disclosed herein; and
Figure 6 is a flow diagram illustrating a reinforcement learning implementation of a root cause estimation method according to an embodiment.

### DETAILED DESCRIPTION

In the present document, the terms "radiation" and "beam" are used to encompass all types of electromagnetic radiation, including ultraviolet radiation (e.g. with a wavelength of 365, 248, 193, 157 or 126 nm) and EUV (extreme ultra-violet radiation, e.g. having a wavelength in the range of about 5-100 nm).

The term "reticle", "mask" or "patterning device" as employed in this text may be broadly interpreted as referring to a generic patterning device that can be used to endow an incoming radiation beam with a patterned cross-section, corresponding to a pattern that is to be created in a target portion of the substrate; the term "light valve" can also be used in this context. Besides the classic mask (transmissive or reflective; binary, phase-shifting, hybrid, etc.), examples of other such patterning devices include:
- a programmable mirror array. More information on such mirror arrays is given in U. S. Patent Nos. 5,296,891 and 5,523,193, which are incorporated herein by reference.
- a programmable LCD array. An example of such a construction is given in U. S. Patent No. 5,229,872, which is incorporated herein by reference.

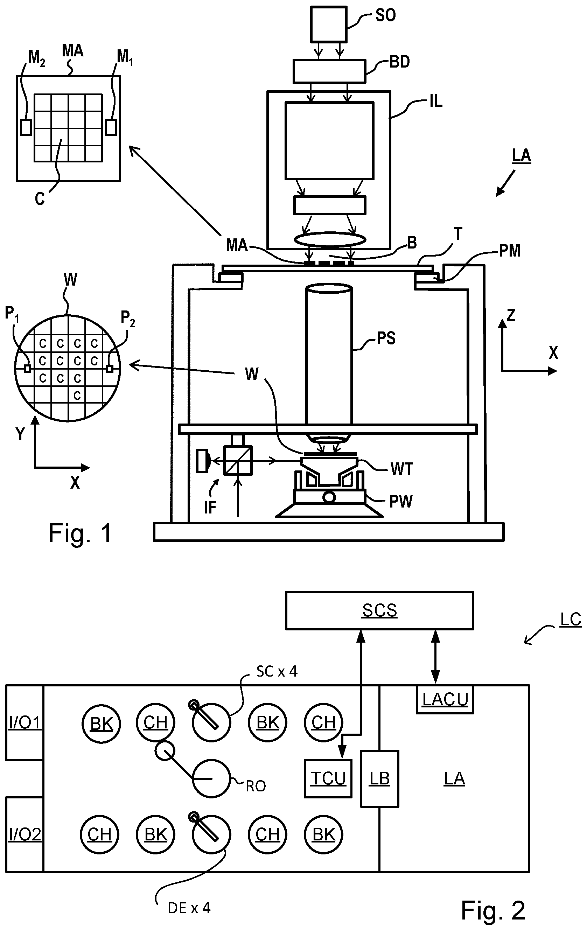

Figure 1 schematically depicts a lithographic apparatus LA. The lithographic apparatus LA includes an illumination system (also referred to as illuminator) IL configured to condition a radiation beam B (e.g., UV radiation, DUV radiation or EUV radiation), a support structure (e.g., a mask table) MT constructed to support a patterning device (e.g., a mask) MA and connected to a first positioner PM configured to accurately position the patterning device MA in accordance with certain parameters, a substrate table (e.g., a wafer table) WT constructed to hold a substrate (e.g., a resist coated wafer- wafer and substrate are synonymous and will be used interchangeably throughout the disclosure) W and connected to a second positioner PW configured to accurately position the substrate in accordance with certain parameters, and a projection system (e.g., a refractive projection lens system) PS configured to project a pattern imparted to the radiation beam B by patterning device MA onto a target portion C (e.g., comprising one or more dies) of the substrate W.

In operation, the illuminator IL receives a radiation beam from a radiation source SO, e.g. via a beam delivery system BD. The illumination system IL may include various types of optical components, such as refractive, reflective, magnetic, electromagnetic, electrostatic, or other types of optical components, or any combination thereof, for directing, shaping, or controlling radiation. The illuminator IL may be used to condition the radiation beam B to have a desired spatial and angular intensity distribution in its cross section at a plane of the patterning device MA.

The term "projection system" PS used herein should be broadly interpreted as encompassing various types of projection system, including refractive, reflective, catadioptric, anamorphic, magnetic, electromagnetic and electrostatic optical systems, or any combination thereof, as appropriate for the exposure radiation being used, or for other factors such as the use of an immersion liquid or the use of a vacuum. Any use of the term "projection lens" herein may be considered as synonymous with the more general term "projection system" PS.

The lithographic apparatus may be of a type wherein at least a portion of the substrate may be covered by a liquid having a relatively high refractive index, e.g., water, so as to fill a space between the projection system and the substrate - which is also referred to as immersion lithography. More information on immersion techniques is given in U. S. Patent No. 6,952,253 and in PCT publication No. WO99-49504, which are incorporated herein by reference.

The lithographic apparatus LA may also be of a type having two (dual stage) or more substrate tables WT and, for example, two or more support structure MT (not shown). In such "multiple stage" machines the additional tables / structures may be used in parallel, or preparatory steps may be carried out on one or more tables while one or more other tables are being used for exposing the design layout of the patterning device MA onto the substrate W.

In operation, the radiation beam B is incident on the patterning device (e.g., mask MA), which is held on the support structure (e.g., mask table MT), and is patterned by the patterning device MA. Having traversed the mask MA, the radiation beam B passes through the projection system PS, which focuses the beam onto a target portion C of the substrate W. With the aid of the second positioner PW and position sensor IF (e.g., an interferometric device, linear encoder, 2-D encoder or capacitive sensor), the substrate table WT can be moved accurately, e.g., so as to position different target portions C in the path of the radiation beam B. Similarly, the first positioner PM and possibly another position sensor (which is not explicitly depicted in Figure 1) may be used to accurately position the mask MA with respect to the path of the radiation beam B. Mask MA and substrate W may be aligned using mask alignment marks M1, M2 and substrate alignment marks P1, P2. Although the substrate alignment marks as illustrated occupy dedicated target portions, they may be located in spaces between target portions (these are known as scribe-lane alignment marks).

As shown in Figure 2 the lithographic apparatus LA may form part of a lithographic cell LC, also sometimes referred to as a lithocell or (litho)cluster, which often also includes apparatus to perform pre- and post-exposure processes on a substrate W. Conventionally these include spin coaters SC to deposit resist layers, developers DE to develop exposed resist, chill plates CH and bake plates BK, e.g. for conditioning the temperature of substrates W e.g. for conditioning solvents in the resist layers. A substrate handler, or robot, RO picks up substrates W from input/output ports I/O1, I/O2, moves them between the different process apparatus and delivers the substrates W to the loading bay LB of the lithographic apparatus LA. The devices in the lithocell, which are often also collectively referred to as the track, are typically under the control of a track control unit TCU that in itself may be controlled by a supervisory control system SCS, which may also control the lithographic apparatus LA, e.g. via lithography control unit LACU.

In order for the substrates W exposed by the lithographic apparatus LA to be exposed correctly and consistently, it is desirable to inspect substrates to measure properties of patterned structures, such as overlay errors between subsequent layers, line thicknesses, critical dimensions (CD), etc. For this purpose, inspection tools (not shown) may be included in the lithocell LC. If errors are detected, adjustments, for example, may be made to exposures of subsequent substrates or to other processing steps that are to be performed on the substrates W, especially if the inspection is done before other substrates W of the same batch or lot are still to be exposed or processed.

An inspection apparatus, which may also be referred to as a metrology apparatus, is used to determine properties of the substrates W, and in particular, how properties of different substrates W vary or how properties associated with different layers of the same substrate W vary from layer to layer. The inspection apparatus may alternatively be constructed to identify defects on the substrate W and may, for example, be part of the lithocell LC, or may be integrated into the lithographic apparatus LA, or may even be a stand-alone device. The inspection apparatus may measure the properties on a latent image (image in a resist layer after the exposure), or on a semi-latent image (image in a resist layer after a post-exposure bake step PEB), or on a developed resist image (in which the exposed or unexposed parts of the resist have been removed), or even on an etched image (after a pattern transfer step such as etching).

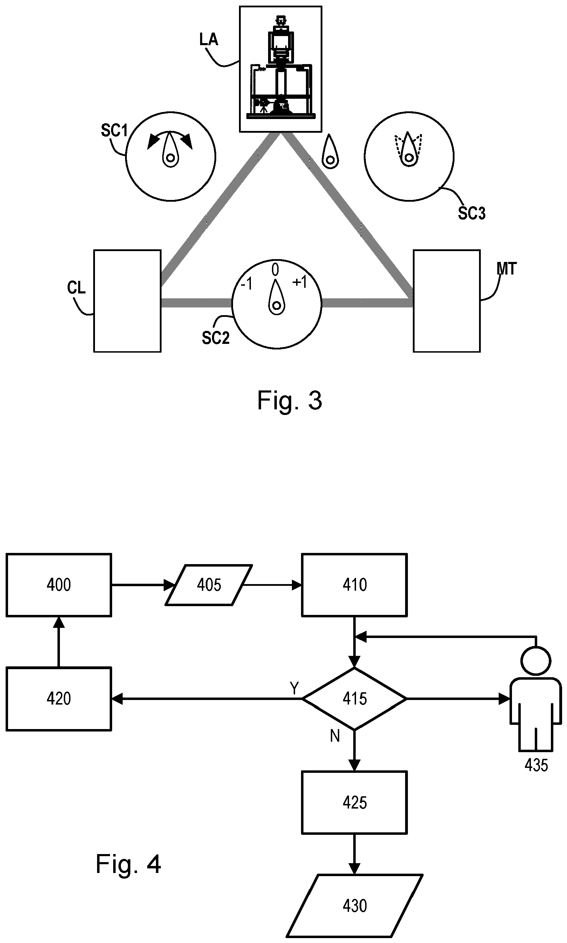

Typically the patterning process in a lithographic apparatus LA is one of the most critical steps in the processing which requires high accuracy of dimensioning and placement of structures on the substrate W. To ensure this high accuracy, three systems may be combined in a so called "holistic" control environment as schematically depicted in Figure 3. One of these systems is the lithographic apparatus LA which is (virtually) connected to a metrology tool MT (a second system) and to a computer system CL (a third system). The key of such "holistic" environment is to optimize the cooperation between these three systems to enhance the overall process window and provide tight control loops to ensure that the patterning performed by the lithographic apparatus LA stays within a process window. The process window defines a range of process parameters (e.g. dose, focus, overlay) within which a specific manufacturing process yields a defined result (e.g. a functional semiconductor device) - typically within which the process parameters in the lithographic process or patterning process are allowed to vary.

The computer system CL may use (part of) the design layout to be patterned to predict which resolution enhancement techniques to use and to perform computational lithography simulations and calculations to determine which mask layout and lithographic apparatus settings achieve the largest overall process window of the patterning process (depicted in Figure 3 by the double white arrow in the first scale SC1). Typically, the resolution enhancement techniques are arranged to match the patterning possibilities of the lithographic apparatus LA. The computer system CL may also be used to detect where within the process window the lithographic apparatus LA is currently operating (e.g. using input from the metrology tool MT), so as to predict whether defects may be present due to e.g. suboptimal processing (depicted in Figure 3 by the arrow pointing "0" in the second scale SC2).

The metrology tool MT may provide input to the computer system CL to enable accurate simulations and predictions, and may provide feedback to the lithographic apparatus LA to identify possible drifts, e.g. in a calibration status of the lithographic apparatus LA (depicted in Figure 3 by the multiple arrows in the third scale SC3).

The lithographic apparatus LA is configured to accurately reproduce the pattern onto the substrate. The positions and dimensions of the applied features need to be within certain tolerances. Position errors may occur due to an overlay error (often referred to as "overlay"). The overlay is the error in placing a first feature during a first exposure relative to a second feature during a second exposure. The lithographic apparatus minimizes the overlay errors by aligning each wafer accurately to a reference prior to patterning. This is done by measuring positions of alignment marks on the substrate using an alignment sensor. More information on the alignment procedure can be found in U.S. Patent Application Publication No. US20100214550, which is incorporated herein by reference. Pattern dimensioning (e.g., CD) errors may, for example, occur when the substrate is not positioned correctly with respect to a focal plane of the lithographic apparatus. These focal position errors may be associated with un-flatness of a substrate surface. The lithographic apparatus minimizes these focal positon errors by measuring the substrate surface topography prior to patterning using a level sensor. Substrate height corrections are applied during subsequent patterning to assure correct imaging (focusing) of the patterning device onto the substrate. More information on the level sensor system can be found in U.S. Patent Application Publication No. US20070085991, which is incorporated herein by reference.

Besides the lithographic apparatus LA and the metrology apparatus MT other processing apparatus may be used during IC production as well. An etching station (not shown) processes the substrates after exposure of the pattern into the resist. The etch station transfers the pattern from the resist into one or more layers underlying the resist layer. Typically etching is based on application of a plasma medium. Local etching characteristics may, for example, be controlled using temperature control of the substrate or directing the plasma medium using a voltage controlled ring. More information on etching control can be found in international Patent Application Publication No. WO2011081645 and U.S. Patent Application Publication No. US 20060016561 which are incorporated herein by reference.

In a manufacturing process such as a lithographic process e.g., exposing structures on a substrate using a system such as lithographic system (e.g., comprising a lithographic apparatus and/or one or more other IC manufacturing apparatus) as described, issues may arise which result in unsatisfactory performance which may in turn result in yield loss (nonfunctional devices). Any divergent behavior or non-ideal behavior will have one or more rootcauses. Identifying the root cause is the first step in resolving issues which arise in all manufacturing processes. Note that divergent behavior in the context of this disclosure may include behavior which is unexpectedly or unusually good (e.g., to determine the reasons for this good behavior), rather than the more typical non-ideal behavior.

With increasing complexity of apparatuses in semiconductor manufacturing, diagnostics becomes increasingly challenging. Many issues can arise, with many potential root causes capable of exhibiting the same behavior. Diagnostic tools and troubleshooting often require the performance of additional measurements in order to identify properly the root cause of a machine or a fabrication plant (fab) issue. Field engineers perform diagnostics with incomplete data and decide dynamically on whether to acquire additional data via diagnostic tests for machine diagnostics, and/or additional tools or wafer measurements for fab diagnostics. These additional measurements are not routinely collected because they are costly and it is difficult to assess their impact on improving the root cause assessment *a priori* due to dependencies with already observed measurements. There are tools available that can support engineers in decision making, such as pattern recognition tools and diagnostic flows, but these are typically limited in their efficacy.

Pattern recognition is typically used to match the issue's symptoms (e.g., a subset of error-log entries) to known failure modes or past issues, for which a database of potential diagnostic flows exists. In this way, the solution space is narrowed. However, there is a huge amount of context information to be analyzed. A substrate is typically subject to hundreds of different process steps in a manufacturing process. For each of these process steps, there may be of the order of magnitude of tens of possible tools/chambers available for wafer processing. Furthermore, even for the same tool/chamber, the tool attribute can also vary and drift over time. There may be a potential correlation between some context variables (e.g., due to not-fully randomized wafer routing). This can degrade the accuracy of the root cause analysis and increase the time to insight, since human supervision/filtering of irrelevant process steps based on domain knowledge is required, As such, pattern recognition reduces the solution space of the issue by matching its symptoms to those of known failure modes or issues that were solved in the past. It is not an interactive tool in the sense that it returns a number of potential solutions matching the symptoms query. The returned candidate solutions might not contain the actual solution. It also does not provide recommendations as to which actions should be performed to better identify the root cause.

Advanced Machine Learning methods such as Bayesian networks have also been suggested for diagnostics, but again they do not tackle the problem of recommending which measurements may be performed to enable the root cause estimation at minimal cost.

A method and system is described for performing root cause diagnosis which is able, dynamically during the diagnosis process, to recommend additional actions to be performed, e.g., what additional information should be collected to improve the root cause assessment. Such a recommendation may take into account the cost of collecting the additional information. For example, additional information may be recommended if it is deemed necessary to improve the root cause assessment as the escalation evolves. Each decision may be made according to a cost-benefit consideration. The problem of deciding whether to recommend a further measurement may be seen as an active feature acquisition problem on prediction time. As such, the method may aim (at least in part) to minimize the overall time to determine a root cause to a particular accuracy (with an uncertainty value below an uncertainty threshold), where a cost associate with an action may be a time cost (time to perform a particular measurement). Other cost considerations may also be made, e.g., monetary cost, additional tooling cost etc..

In an embodiment, a probabilistic model such as a Bayesian model may be interrogated by a reinforcement learning framework. The probabilistic model may be used to evaluate probabilities of candidate root causes being the actual root cause, thereby providing an intermediate root cause assessment and an associated uncertainty metric value describing an uncertainty in that evaluation. The probabilistic model may also impute unknown evidence (e.g., the result of a candidate action or measurement not yet performed) and an associated uncertainty metric value describing an uncertainty in the imputed evidence.

Using a probabilistic model such as a Bayesian model ensures that the interdependency of different components and/or failure modes are modeled and taken into account (e.g., a detected lens issue may have some dependency on one or more issues of other scanner components). Such interdependency is a feature of behavior of lithographic apparatuses. A reinforcement learning framework enables decisions to be made on data acquisition based on the cost and benefit (reward) of the data acquisition. Over time, a recommender (agent) of the reinforcement learning framework can improve its decision making so as to arrive at the correct root cause for the lowest cost.

Such a method may use machine learning models to perform root cause assessment with partial information, while simultaneously proposing what additional measurements to query within the environment in order to improve their assessment dynamically. The system can optionally interact with a field engineer or other expert and use their feedback to improve root cause estimation performance and/or decision making/action ranking.

Figure 4 is a high level flow diagram describing a possible embodiment. A root cause estimation step 400 yields an intermediate root cause estimation 405. A measurement acquisition score is determined 410 based on the intermediate root cause estimation 405. A recommender 415 recommends a further action based on the measurement acquisition score and additional information such as acquisition cost. The further action may be which next measurement(s), if any, should be acquired. If a further action (e.g., measurement) is recommended Y then the recommended action is performed 420. These root cause estimation step 400 is performed again based to yield an updated intermediate root cause estimation 405 based on the expanded information gained from the recommended action 420. At some point, e.g., when the intermediate root cause estimation is considered to be sufficiently certain, the recommender 415 may recommend no further action N. This last intermediate root cause estimation 405 may be then finalized 425 as the output root cause estimation 430. Optionally, the recommender's recommendation may be presented to a human expert 435 (e.g., field engineer), who can provide their feedback thereon to the recommender 415.

The root cause estimation step 400 may employ at least one machine learning model to use the available information and measurements to assess the (intermediate) root cause and its uncertainty. Any suitable uncertainty metric may be used to quantify uncertainty. In its assessment, the model can use imputations (estimations) of any missing measurements (or impute the missing measurements). As diagnostic measurements typically have dependencies on each other, the machine learning model may comprise at least one probabilistic model such as at least one Bayesian Network, which takes into account the conditional dependencies among features. Multiple such (e.g., probabilistic) machine learning models may be used, with each model modeling a respective submodule of the system.

The estimation of measurement acquisition score step 410 may combine relevant quantities into one measurement acquisition score or measurement acquisition value (e.g., per missing measurement or candidate action). The relevant quantities may comprise one or more of *inter alia*: known information or evidence (e.g., from *inter alia* measurements, logs, sensor values, test results, manual checks), any estimated, inferred or known information gain for the root cause assessment associated with an action (any suitable informitivity metric or information theory metric may be used to quantify information gain, e.g., entropy based metrics), potential imputations/estimations/abstractions of missing values, the uncertainty associated with these missing values, additional models, context information (e.g., age or usage of a component). For example, if a missing measurement can be imputed with low uncertainty, it does not need to be measured. In another example, an old and/or well used component may be more likely to relate to a root cause, and therefore any measurement associated with such a component may be deemed more likely to provide relevant information.

The recommender 415 may combine the measurement estimation score (e.g., as an intermediate positive reward) for each candidate action) together with other information from the environment such as corresponding cost information (e.g., an intermediate negative reward) and recommend a next action. This recommendation may comprise a ranking of possible additional or candidate actions/measurements according to their score. An action may be performed based upon this ranking. For example, the top ranked recommendation may be acted upon without human intervention. Optionally, one or more of the highest ranking recommendations may be provided to the human expert 435 who can make a final selection.

The expert 435 may be a human in the loop (field engineer), who receives the recommendations and decides whether to approve them and/or which to approve. The human input could be fed back to the recommender 415 in order to improve its decision making. This feedback could be simple feedback commands (e.g., undo, correct, incorrect) or more detailed feedback such as changing the ranking of the recommendations or suggesting a different set of actions. Human feedback can include the root cause itself, after this has been determined (e.g., after the divergent behavior event). This component is optional as it requires additional design complexity and software interfaces; however it can increase the performance of the recommender system.

In a specific implementation, the proposed methods for root cause determination may use a probabilistic model within a reinforcement learning framework. The probabilistic model may comprise a probabilistic graphical model and may implement the root cause estimation and measurement acquisition score determination steps described in relation to Figure 4. For example, the probabilistic model may comprise a Bayesian Network model. The root cause estimation and measurement acquisition score determination may further use suitable simulation techniques using the probabilistic model, such as Monte Carlo simulations. As such, a proposed embodiment may uses a Bayesian Network (BN) or other probabilistic model as an automated reasoning tool to find the most likely Root Cause (RC).

The remaining disclosure will assume a BN based model (or models). However, this is not essential and any suitable probabilistic model may be used which can determine a joint distribution of unobserved health states of components (root causes) and optionally any one or more of: context information (e.g., age of components), unobserved imputations or abstractions, diagnostic evidence (logs, sensor values, test results, manual checks, etc.).

A probabilistic graphical model or BN model may comprise a number of variables which do not need to be necessarily observed (for example, unobserved variables may include the nodes representing the root causes). Variables may be nodes (vertices) of a directed graph structure such as a Directed Acyclic Graph (DAG) for example. The value of a node may depend on the value of its ancestors through the probabilistic model. The DAG may induce a factorization of the joint probability distribution of all variables in the model. Using a Bayesian approach for example, the observed nodes/variables induce a posterior distribution on the unobserved nodes/variables through: probabilistic models for the value of child node(s) conditioned on their ancestors, and the prior distribution for the values of nodes without ancestors.

The posterior may be used to simulate additional evidence, such that possible or candidate (next) diagnostic actions may be ranked based on the expected change they would induce on the posterior of the root cause nodes of the network. As already described, such additional evidence may comprise one or more of: imputed values for any unknown node, uncertainty, context information and information gain. This additional evidence may be combined or summarized into a measurement acquisition score by which the candidate diagnostic actions may be ranked.

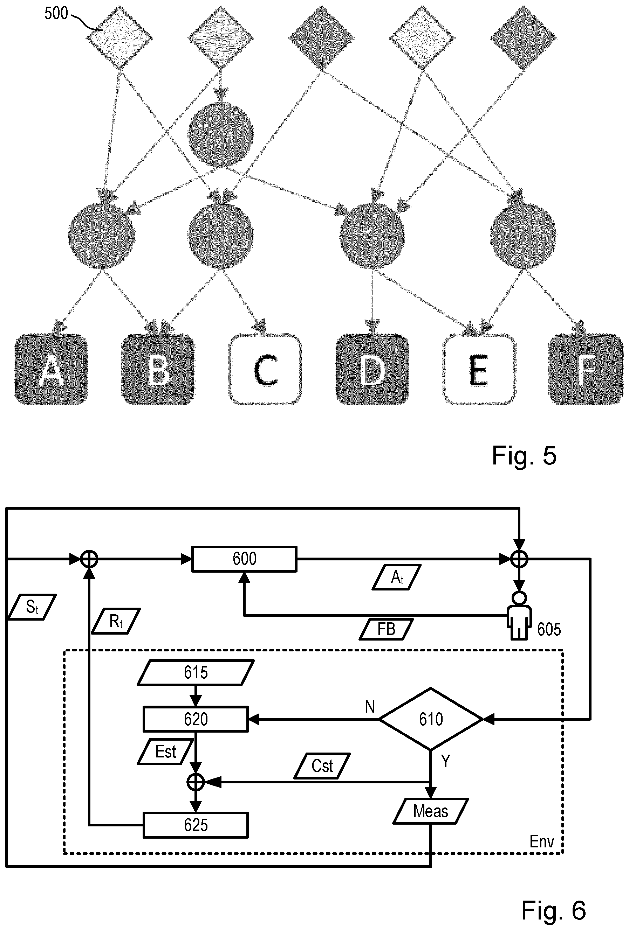

Figure 5 is a network diagram illustrating a specific simplified example of a probabilistic graphical model which may be used in a root cause estimation module according to embodiments disclosed herein. In this network, the diamond-shape nodes 500 represent the potential or candidate root causes; the darker the color of the node, the more likely is that node to be the root cause (in this example, the third and fifth diamond-shape node 500 are equally likely to be the root cause). The square nodes A-F are the evidence nodes which hold information or evidence, for example values and/or results of a number of diagnostic tests. The dark shading of evidence nodes A, B, D, and F signify that a diagnostic action has already performed, and the corresponding evidence plugged into the network. Evidence on nodes A, B, D, and F induces a posterior p₁ on all other nodes (here C, E) without an assigned value. In particular, this induces a bivariate posterior π on evidence nodes C and E via marginalization.

To estimate quantities relevant for deciding on a further action (e.g., further acquisition), the following algorithm may be performed:
1. Let p₁ be the posterior induced on the unassigned nodes of the network after observing all known evidence (i.e., the evidence collected to date).
2. Let π be the posterior p₁ marginalized on the unassigned nodes for the results of diagnostic tests (candidate actions).
3. Sample from the aforesaid posterior to individually obtain estimated results (one or more sampled values) of the not-yet-performed diagnostic tests or candidate actions.
4. For each node among the not-yet-performed diagnostic actions,
   a. For each of the sampled values for that node,
      i. Plug the value from point a. in the node from step 2.
      ii. Compute the new posterior p₂ in the root cause nodes.
      iii. Evaluate a metric for the change in the posterior p₂ with respect to p₁ (posterior in the scenario where no additional evidence is plugged). This metric could be *inter alia* the ℓ₂ distance between p₁ and p₂, or an aggregation of the mutual information between p₁ and pz at every node, or an aggregation of the information gain.
   b. Estimate the expected change in the metric, e.g., using a Monte Carlo method, across the sampled values for the node.
5. Output any candidate actions (unperformed actions) with associated expected change in the posterior (e.g., an uncertainty metric in an associated root cause estimation) based on the values estimated at the point 4b.

For the recommender, a model-based reinforcement learning implementation is proposed, optionally with human feedback. This is only an example implementation and more traditional machine learning techniques can be used. For example, instead of learning a policy to rank action plans according to their scores and costs, heuristics may be constructed based on thresholds or cascades of root cause estimation models. However, Reinforcement Learning (RL) is naturally suited to this application. In particular, training such a model-based reinforcement learning is data efficient due to the (good) accuracy of the probabilistic model (Bayesian Network) used to model the root cause estimation.

The Reinforcement learning framework may learn by continued use of the probabilistic model or BN to determine probabilities of root causes based on observed evidence, and subsequently propose (e.g., ranked) actions (e.g., measurements, interventions, etc.) so as to maximize or enhance the probability of correct root cause inference in a cost-effective manner. The probabilistic model may be interrogated to deliver posteriors based on the evidence and the reinforcement learning framework, optionally helped by engineer, to learn what actions related to evidence collection drive the posteriors such that they improve root cause estimation.

Figure 6 is a flow diagram illustrating a method for root cause determination according to a reinforcement learning approach. The flow shows the recommender 600 as will be described, and root cause estimator 620 as has already been described (e.g., comprising a probabilistic model or BN model).

The RL implementation may embody a Markov decision process (MDP) comprising an agent (the recommender 600) interacting with the environment Env, a set of states S defining a state space and a set of actions A per state. In a particular (e.g., present) state St, the agent 600 decides on a next action Aₜ from the set of actions (candidate actions) for that state Sₜ, according to a policy which has to be learnt. When the agent 600 decides on a state change, it gets a reward Rₜ. The goal of the agent is to maximize its total rewards (e.g., determine a policy which maximizes the rewards).

The agent decides 610 on a next action Aₜ based on the (present) state Sₜ from the environment Env. Such an action may comprise the agent 600 recommending a candidate action or diagnostic test which may be performed next so as to acquire extra data and/or comprise a ranking of possible candidate actions. As such, the agent 610 is the recommender of the proposed scheme. Intermediate rewards and information 625 may be obtained from the root cause estimation model 620 such as *inter alia*: the intermediate or current root cause prediction Est and/or associated uncertainties in the estimates and/or the unobserved features. The root cause estimation model 620 receives all available information/measurements 615 for each state.

The possible actions at decision 610 may be to i) acquire Y any of the unobserved features, i.e., expensive measurements Meas, or a set of them or ii) stop N and output the current prediction Est.

The state St contains all the information collected so far 615 and the newly acquired information, as acquired at measurement Meas. The transitions from one state to the other are highly determined by the dependencies of the diagnostics measurements and their relation to the potential root causes, namely the conditional dependencies as modeled by the Bayesian network 620.

The environment Env comprises all possible states in the system and all state transitions. The environment interacts with the agent providing state updates and rewards.

The reward Rₜ comprises the positive reward for any proposed action as determined by the root cause estimator (e.g., corresponding the acquisition score in Figure 4) and any negative reward or cost associated with performance of any actions. At each state, the agent gets a negative reward (or cost) Cst when acquiring a measurement. On a simple level, the cost may be the same for any additional measurement. However, a better policy may be determined if the cost is dependent on an actual cost of the action (e.g., in terms of time and/or any other consideration such as monetary cost/additional tool(s) required etc.). Some metrology actions may be associated with a much higher cost than others (e.g., a metrology action performed within the tool in question (e.g., scanner) using one or more on-board sensor(s) may be cheaper than those which require other tools, or require the tool to be taken offline and/or apart). Based on any estimated improvement of the intermediate root cause assessment Est, additional positive rewards 625 may be awarded. Intermediate rewards may be determined, e.g., for each new state and/or each time information is acquired. Such intermediate rewards may be based on the information gain and improvement of the intermediate root cause assessment, and may include additional positive rewards.

A final reward is determined after the termination of the process when the root cause case has been solved. This may be when the root cause is identified/estimated with a particular certainty (e.g., uncertainty below a threshold uncertainty value). The final reward describes how successful the agent has been in acquiring the correct root cause with the minimum cost (e.g., minimum number of measurements or measurement time). In this way, a trade-off may be achieved between optimizing performance on root cause estimation and minimizing the acquired information.

A human expert 605 can also provide feedback FB, such as rewards, to the agent 600 indicating their satisfaction on the agent's recommendation. This can help the agent 600 to improve its policy. A more effective way for the human to interact with the agent may be to provide input directly on any action Aₜ in a particular state. Examples of human input to the agent can be "UNDO", "correct", "incorrect", or their own decisions (ranking) additional measurement acquisitions.

The agent 600 is trained to learn an optimal policy for recommending actions such as measurement acquisition. To learn the optimal policy, any state-of-the art RL algorithms may be used (e.g., optionally in combination with human feedback FB). A state-of-the-art algorithm which may be used, for example, is Proximal Policy Optimization. In this case, the reward will include human feedback on top of the other information in any format. Examples of how human feedback may be included in the reward is to use any distance estimation between human feedback and recommendation (such as Kullback Leibler divergence), or even model updates or gradients trained using human input as supervised labels. Such an implementation can support irregular human input thanks to the support of the Bayesian Network which can provide intermediate rewards.

The human interaction with the agent may use human understandable explanations of the agent decisions. This explanation can be provided via explainable approximations of the complex decision function such as linear approximations, decisions trees etc..

The actual implementation for the root cause estimator may use a plurality of Bayesian networks (e.g. one for each (sub)domain or (sub)function of the equipment), for which one or more policies can be learned, e.g., to learn a customer-specific optimal resolution policy or to specialize it (sub)domain-wise.

While the concepts disclosed herein are described in the context of root cause analysis, it is not limited to such. The concepts disclosed herein may be applied to an assessment action of any apparatus, system or arrangement where additional data having an associated cost may be acquired to make the assessment action, the additional data being interdependent, and decisions need to be made on whether to acquire the additional data.

Further embodiments of the invention are disclosed in the list of numbered clauses below:
1. A method for assessing a plurality of candidate actions for obtaining evidence data and relating to an assessment action of at least one manufacturing apparatus or system, the method comprising:
   obtaining at least one probabilistic model which relates said evidence data to an estimated probability of one or more assessment states of the manufacturing apparatus;
   determining, using the at least one probabilistic model, an estimated probability of one or more assessment states based on evidence data comprising additional evidence from one or more candidate actions which have not been performed;
   determining a reward based on the respective estimated probability of the one or more assessment states and an associated respective cost of said one or more candidate actions; and
   deciding on whether to perform any of said one or more candidate actions based on said reward.
2. A method according to clause 1, wherein said one or more assessment states comprises one or more root cause assessments for assessing divergent behavior of said manufacturing apparatus or system.
3. A method according to clause 1 or 2, wherein said one or more candidate actions comprise performance of at least one or more additional measurements and/or diagnostic actions.
4. A method according to any preceding clause, wherein said at least one probabilistic model comprises at least one Bayesian network model.
5. A method according to any preceding clause, further comprising using the at least one probabilistic model to determine an uncertainty associated with each said one or more assessment states.
6. A method according to any preceding clause, further comprising using the at least one probabilistic model to impute said evidence data for said one or more candidate actions which have not been performed to obtain imputed evidence data; and wherein said evidence data comprises the imputed evidence data.
7. A method according to any preceding clause, wherein said evidence data further comprises context information and/or information gain data.
8. A method according to any preceding clause, wherein said method is performed over multiple iterations until said estimated probability of one or more assessment states is estimated with a sufficient certainty, with each iteration being based on said evidence data comprising any additional evidence data obtained as a result of the deciding step of the previous iteration(s).
9. A method according to clause 8, wherein each iteration comprises determining an intermediate said reward and intermediate said estimated probability of one or more assessment states, said deciding step being performed based on said intermediate reward and intermediate said estimated probability of one or more assessment states.
10.A method according to any preceding clause, comprising obtaining a recommender; and using the recommender to perform said deciding on whether to perform any of said one or more candidate actions.
11. A method according to clause 10, wherein the recommender comprises an agent in a reinforcement learning framework, said recommender being operable to learn improvement in said deciding over time based on said reward.
12.A method according to clause 11, wherein said reinforcement learning framework comprises a Markov decision process.
13.A method according to any of clauses 10 to 12, wherein the recommender is operable to maximize said reward, wherein said cost comprises a negative reward in said determination of said reward.
14.A method according to any of clauses 10 to 13, wherein said decision and/or any output of the recommender is presented to a human expert for scrutiny and/or feedback.
15.A method according to any preceding clause, wherein said at least one probabilistic model comprises a respective probabilistic model for two or more components or sub-systems of said at least one manufacturing apparatus or system.
16.A method according to any preceding clause, wherein said cost is dependent at least on an expected cost for performing each said one or more candidate actions.
17.A method according to any preceding clause, wherein said cost is dependent at least on a time for performing each said one or more candidate actions.
18.A method according to any preceding clause, wherein said deciding step comprises:
   ranking said one or more candidate actions to obtain ranked candidate actions based on said reward; and
   making said decision based on said ranked candidate actions.
19.A method according to any preceding clause, comprising, where the decision step has decided on performing at least one of the one or more candidate actions, performing said at least one of the one or more candidate actions as decided.
20.A method according to any preceding clause, comprising, where the decision step has decided on not performing any more candidate actions, determining a final estimation of said one or more assessment states based on the most recent estimated probability of the one or more assessment states.
21. A method according to any preceding clause, wherein said at least one manufacturing apparatus or system comprises at least one integrated circuit manufacturing apparatus or system.
22.A computer program comprising program instructions operable to perform the method of any of clauses 1 to 20, when run on a suitable apparatus.
23.A non-transient computer program carrier comprising the computer program of clause 22.
24.A processing system comprising a processor and the computer program of clause 22.
25.An integrated circuit manufacturing apparatus or system comprising the processing system of clause 24.

While the concepts disclosed herein are disclosed in relation to manufacturing systems, more particularly IC manufacturing systems (e.g., comprising one or more of a lithographic apparatus/scanner, metrology apparatus, etching apparatus, deposition apparatus), it may be applicable to any system.

Although specific reference may be made in this text to the use of lithographic apparatus in the manufacture of ICs, it should be understood that the lithographic apparatus described herein may have other applications. Possible other applications include the manufacture of integrated optical systems, guidance and detection patterns for magnetic domain memories, flat-panel displays, liquid-crystal displays (LCDs), thin-film magnetic heads, etc.

Although specific reference may be made in this text to embodiments of the invention in the context of a lithographic apparatus, embodiments of the invention may be used in other apparatus. Embodiments of the invention may form part of a mask inspection apparatus, a metrology apparatus, or any apparatus that measures or processes an object such as a wafer (or other substrate) or mask (or other patterning device). These apparatus may be generally referred to as lithographic tools. Such a lithographic tool may use vacuum conditions or ambient (non-vacuum) conditions.

Although specific reference may have been made above to the use of embodiments of the invention in the context of optical lithography, it will be appreciated that the invention, where the context allows, is not limited to optical lithography and may be used in other applications, for example imprint lithography.

While specific embodiments of the invention have been described above, it will be appreciated that the invention may be practiced otherwise than as described. The descriptions above are intended to be illustrative, not limiting. Thus it will be apparent to one skilled in the art that modifications may be made to the invention as described without departing from the scope of the claims set out below.

## Claims

1. A method for assessing a plurality of candidate actions for obtaining evidence data and relating to an assessment action of at least one manufacturing apparatus or system, the method comprising:
obtaining at least one probabilistic model which relates said evidence data to an estimated probability of one or more assessment states of the manufacturing apparatus;
determining, using the at least one probabilistic model, an estimated probability of one or more assessment states based on evidence data comprising additional evidence from one or more candidate actions which have not been performed;
determining a reward based on the respective estimated probability of the one or more assessment states and an associated respective cost of said one or more candidate actions; and
deciding on whether to perform any of said one or more candidate actions based on said reward.

2. A method as claimed in claim 1, wherein said one or more assessment states comprises one or more root cause assessments for assessing divergent behavior of said manufacturing apparatus or system.

3. A method as claimed in claim 1 or 2, wherein said one or more candidate actions comprise performance of at least one or more additional measurements and/or diagnostic actions.

4. A method as claimed in any preceding claim, wherein said at least one probabilistic model comprises at least one Bayesian network model.

5. A method as claimed in any preceding claim, further comprising using the at least one probabilistic model to determine an uncertainty associated with each said one or more assessment states.

6. A method as claimed in any preceding claim, further comprising using the at least one probabilistic model to impute said evidence data for said one or more candidate actions which have not been performed to obtain imputed evidence data; and wherein said evidence data comprises the imputed evidence data.

7. A method as claimed in any preceding claim, wherein said method is performed over multiple iterations until said estimated probability of one or more assessment states is estimated with a sufficient certainty, with each iteration being based on said evidence data comprising any additional evidence data obtained as a result of the deciding step of the previous iteration(s).

8. A method as claimed in any preceding claim, comprising obtaining a recommender; and using the recommender to perform said deciding on whether to perform any of said one or more candidate actions.

9. A method as claimed in claim 8, wherein the recommender comprises an agent in a reinforcement learning framework, said recommender being operable to learn improvement in said deciding over time based on said reward.

10. A method as claimed in any of claims 8 to 9, wherein the recommender is operable to maximize said reward, wherein said cost comprises a negative reward in said determination of said reward.

11. A method as claimed in any preceding claim, wherein said at least one probabilistic model comprises a respective probabilistic model for two or more components or sub-systems of said at least one manufacturing apparatus or system.

12. A method as claimed in any preceding claim, wherein said cost is dependent at least on an expected cost for performing each said one or more candidate actions.

13. A method as claimed in any preceding claim, wherein said deciding step comprises:
ranking said one or more candidate actions to obtain ranked candidate actions based on said reward; and
making said decision based on said ranked candidate actions.

14. A computer program comprising program instructions operable to perform the method of any of claims 1 to 13, when run on a suitable apparatus.

15. A non-transient computer program carrier comprising the computer program of claim 14.
